# EUROPÄISCHE PATENTSCHRIFT

(11) **EP 0 592 368 B1**
(45) Veröffentlichungstag und Bekanntmachung des Hinweises auf die Patenterteilung: **04.06.1997**
(21) Anmeldenummer: 93810694.5
(22) Anmeldetag: 01.10.1993
(51) Int. Cl.: C05F 17/02

(54) **Kompostieranlage**
Composting installation
Installation de compostage

(30) Priorität: 05.10.1992 CH 3106/92
(43) Veröffentlichungstag der Anmeldung: 13.04.1994
(73) Patentinhaber: Rindelaub, Frank Alex Erich, 2014 Bôle (CH); Schmutz, Urs, 4466 Ormalingen (CH)
(72) Erfinder: Schmutz, Urs, CH-4466 Ormalingen (CH)
(74) Vertreter: Braun, André

(56) Entgegenhaltungen:
- EP-A- 0 501 319
- CH-A- 680 134
- FR-A- 2 673 621

## Beschreibung

Die Erfindung betrifft eine vollautomatische Kompostieranlage in einer geschlossenen, durch Wände und ein Dach begrenzten Halle mit mehreren nebeneinander angeordneten Kompostierboxen, unterhalb derselben verlaufenden und mit den Boxen in Verbindung stehenden Belüftungskanälen und Mitteln zum Zuführen, Mischen, Umwälzen, Umsetzen und Austragen des zu behandelnden Rohmaterials und des Komposts.

Eine Kompostieranlage dieser Art ist im Schweizer Patent Nr. 680 134 beschrieben. Mit zunehmendem Umweltbewusstsein der Bevölkerung besteht eine steigende Tendenz, organische Abfallprodukte aus dem Müll herauszusondern und zu kompostieren. Dies führt zu einem Bedarf an mehr und vor allem grösseren Kompostieranlagen. Auf der anderen Seite sind grössere Kompostieranlagen mit Geruchsemission in vielen Fällen nicht mehr genehmigungsfähig.

Der Erfindung liegt die Aufgabe zugrunde, eine Kompostieranlage zu konzipieren, die einerseits eine Kapazität aufweist, um den kommunalen und/oder überregionalen Kompostierungsbedarf zu decken, und andererseits emissionsfrei und ohne Risiko für das Betriebspersonal arbeitet.

Erfindungsgemäss wird dies dadurch erreicht, dass die Mittel zum Zuführen, Mischen, Umwälzen, Umsetzen und Austragen aus mindestens einer festen Austragsförderspirale, die sich unterhalb der Austragsöffnungen mehrerer Kompostierboxen erstreckt, mindestens einer festen Eintragsförderspirale, die sich oberhalb mehrerer Kompostierboxen erstreckt, mindestens einer schräg verlaufenden Verbindungsförderspirale und mindestens einer über die Kompostierboxen bewegbaren Verteilerförderspirale bestehen.

Die Förderspiralen bestehen vorzugsweise aus wellenlosen Spiralen in einem sie teilweise umgebenden Gehäuse.

Gemäss einer weiteren bevorzugten Ausführungsform besitzt die Verteilerförderspirale Abwurföffnungen mit einer Einrichtung zu deren gleichzeitigem Öffnen und Schliessen.

Vorzugsweise bestehen die Förderspiralen aus zwei koaxial ineinanderliegenden und miteinander verschweissten wellenlosen Spiralen.

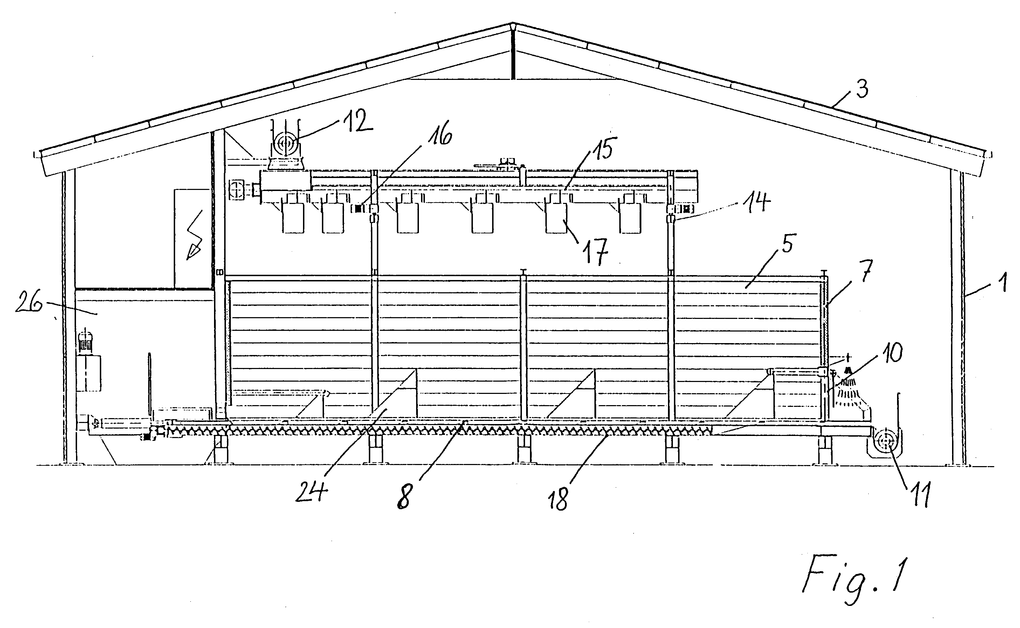

Im folgenden sind anhand der beiliegenden Zeichnungen Ausführungsbeispiele der Erfindung beschrieben. Es zeigen
Fig. 1 einen Schnitt durch eine Kompostieranlage entlang einer Ebene, die in Fig. 2 mit A - A angegeben ist.
Fig. 2 eine Aufsicht auf dieselbe Kompostieranlage mit abgenommenem Dach
Fig. 3 einen vergrösserten Querschnitt durch eine einzelne Kompostierbox
Fig. 4 einen Querschnitt durch einen Teil eines Kratzbodens
Fig. 5 einen Längsschnitt durch einen Teil eines Kratzbodens
Fig. 6 den Grundriss einer Anlage mit zwei getrennten Systemen oder Bereichen und dazwischen liegender Hygienebarriere

Eine Halle aus Längswänden 1, Querwänden 2 und einem Dach 3 ist rundum so abgedichtet, dass Luftaustritt in die Umgebung im wesentlichen nur durch dafür vorgesehene Biofilter nahe der Oberkante der einen Längswand möglich ist. Alternativ kann anstelle der Biofilter ein biologischer Abluftwäscher eingesetzt werden, bei dem Mikroorganismen verwendet werden, um geruchsaktive Substanzen abzubauen.

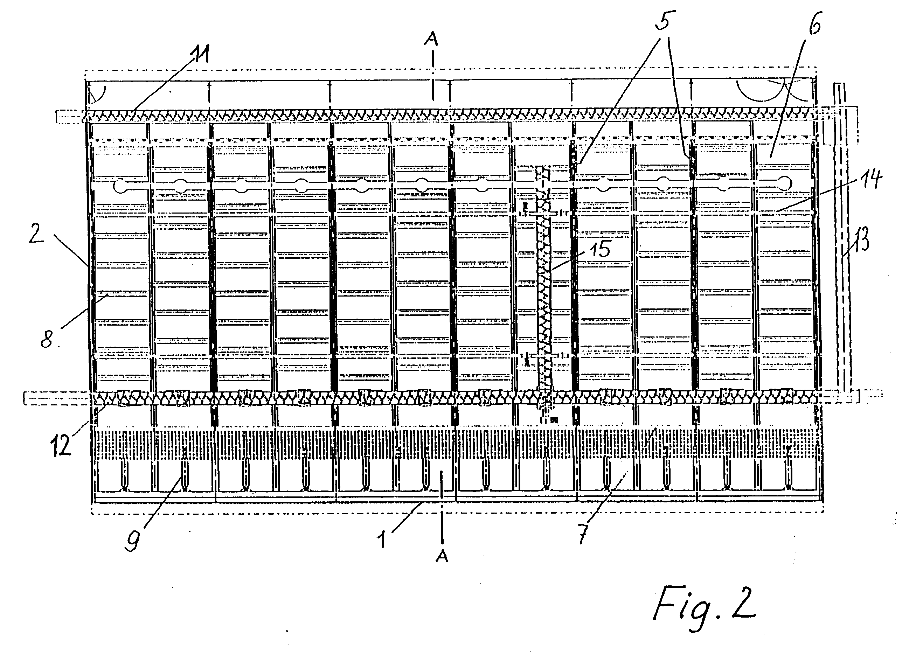

Etwa drei Viertel der Hallenfläche sind durch sechs nebeneinander angeordnete und durch Trennwände 5 gegeneinander abgegrenzte Kompostierboxen 6 beansprucht, in denen sich das zu behandelnde Rohmaterial, gelegentlich in dieser Beschreibung als Kompostiergut K bezeichnet, befindet, das in jeder Box unterschiedlich sein kann. Diese Boxen sind in der Aufsicht der Fig. 2 gut erkennbar. Sie sind langgestreckt und durch die Trennwände 5 sowie eine vordere Begrenzungswand 7 begrenzt. Als untere Begrenzung besitzen diese Boxen sog. Kratzböden 8, die durch Hydraulikzylinder 9 angetrieben werden. Die vordere Begrenzungswand 7 besitzt in ihrem unteren Bereich den Boxen zugeordnete Austragsöffnungen 10.

Für den Transport des Kompostiergutes und des fertigen Komposts sind an sich bekannte wellenlose, mit Gehäusen versehene Förderspiralen vorgesehen. Die Spiralen können mit definiert angeordneten Auflockerungsbolzen versehen sein. Eine Austragsförderspirale 11 erstreckt sich vor den Austragsöffnungen der Kompostierboxen 6 über die ganze Länge der nebeneinander angeordneten Boxen und kann auf einer oder beiden Seiten durch die Querwände hindurch nach aussen reichen.

Oberhalb der Kompostierboxen erstreckt sich eine feste Eintragsförderspirale 12 ebenfalls über diese ganze Länge und ggf. auf einer oder beiden Seiten durch die Querwände nach aussen. Ausserhalb der Halle ist an einer Seitenwand eine schräg verlaufende Verbindungsförderspirale 13 angeordnet, die die Austragsförderspirale und die Eintragsförderspirale miteinander verbindet. Die bei der vorliegenden Ausführungsform ausserhalb der Halle angeordnete Verbindungsförderspirale 13 kann alternativ auch in der Halle verlaufen, was vor allem zweckmässig ist, wenn es sich wie die horizontal verlaufenden Förderspiralen um eine offene Bauform handelt. Unter offener Bauform wird hier eine Form verstanden, die zwar abgedeckt sein kann, aber im Gegensatz zur Rohrförderschnecke oder -spirale über der Spirale einen Luftraum besitzt, dessen Querschnitt von etwa gleicher Grössenordnung ist wie die Spirale. Diese hat gegenüber der geschlossenen Spirale den Vorteil, dass sie nicht verstopfen und auch gröberes Material fördern kann. Ausserdem wird in ihr eine bessere Durchmischung des Materials an sich und mit Feuchtigkeit erzielt. Die Voraussetzung für die Verwendung einer offenen Förderspirale ist eine Neigung von nicht mehr als etwa 30° gegenüber der Horizontalen.

Über den Kompostierboxen 6 sind waagrechte Laufschienen 14 angebracht. Auf diesen Laufschienen 14 ist Verteilerförderspirale 15 gelagert, die mittels eines Fahrantriebs 16 über alle Kompostierboxen 6 bewegt werden kann. Das Gehäuse der Förderspirale 15 besitzt auf seiner Unterseite sechs Abwurfschächte 17, die in annähernd gleichmässigen Abständen über den Kammern angeordnet sind.

Die Abwurfschächte sind mit Verschlussklappen und einer Einrichtung zu deren gleichzeitigem Öffnen und Schliessen versehen. Das Öffnen der Klappen erfolgt abhängig von der Menge des Materials, das sich in der Verteilförderspirale befindet, z.B. in dem Moment, in dem das geförderte Kompostiergut das Ende der Verteilförderspirale erreicht. Nach einer kurzen, für die Entleerung ausreichenden Zeit werden die Klappen selbstätig wieder geschlossen. Auf diese Weise erreicht man eine wesentlich gleichmässigere Materialverteilung als mit ständig geöffneten Abwurfschächten.

Der Antrieb der Verteilerförderspirale ist so ausgelegt, dass sie pro Box mehrere fixe Positionen einnehmen kann. Auf diese Weise ist auch quer zu den Kompostierboxen eine weitgehend gleichmässige Verteilung des eingebrachten Materials gewährleistet. Alternativ kann anstelle der Fixpositionen die Verteilerförderspirale 15 während des Abwurfes kontinuierlich oder schrittweise über der Kompostierbox hin- und hergefahren werden. Damit wird eine noch gleichmässigere Verteilung des Kompostiergutes quer zu der Kompostierbox erreicht. Für die Übernahme des Kompostiergutes von der Eintragsförderspirale 12 ist die Verteilerförderspirale 15 in diesem Fall mit zwei Hilfsförderspiralen versehen, die sich unterhalb der Eintragsförderspirale 12 befinden und sich T-förmig zur Verteilerförderspirale 15 erstrecken. Sie sind gegenläufig und fördern das Kompostiergut von der geöffneten Auswurfluke der Eintragsförderspirale 12 zur Verteilerförderspirale 15 hin, wenn diese seitlich verfahren ist.

Obwohl durch die Bauform und die Funktion der Förderspiralen während des Transports des zu behandelnden Materials eine sehr gute Mengenverteilung und Durchmischung desselben erreicht wird, ist es wegen der Änderung seiner Konsistenz im Laufe des Kompostierungsprozesses vorteilhaft, den Austrag aus den Boxen über eine Mengenstrommessung zu steuern. Dies erfolgt beispielsweise durch Haltezeiten während des Hubes der Zylinder 9. Diese Haltezeiten werden durch ein Programm und durch Messung des Volumenstroms in einer Förderspirale, vorzugsweise in der Verbindungsförderspirale 13 gesteuert. Als Messwertgeber eignet sich beispielsweise eine auf dem Volumenstrom schwimmende Klappe, deren Auslenkung elektrisch erfasst und zu einem Steuersignal umgewandelt wird.

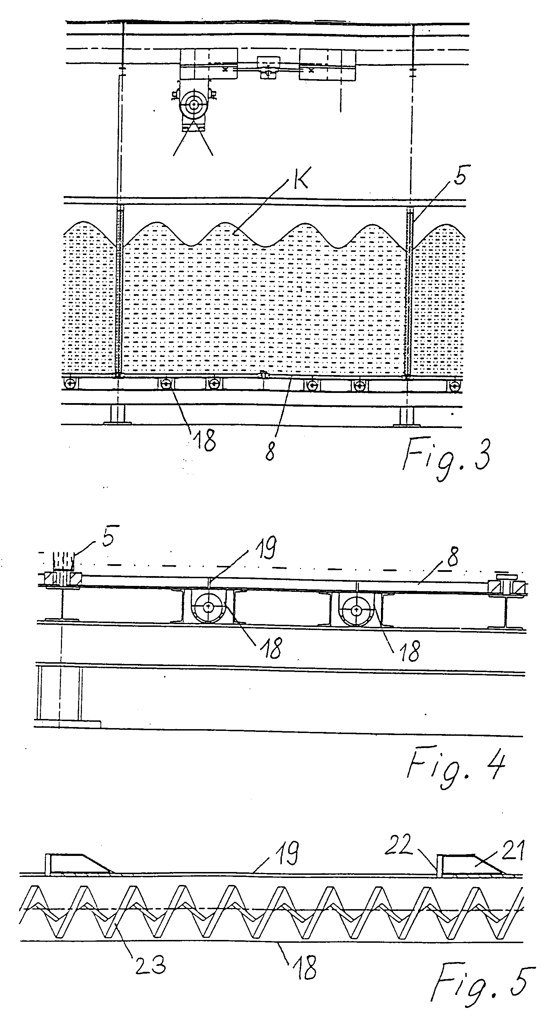

Unter den Kratzböden befindet sich eine in den Fig. 3-5 detaillierter gezeigte Belüftungseinrichtung, mittels der Luft in das auf den Kompostierboxen befindliche Kompostiergut geleitet wird. Unter jeder Box befinden sich mehrere Kanäle 18 mit im wesentlichen U-förmigem Querschnitt, die sich über die ganze Boxenlänge erstrecken. Oberhalb der Kanäle befinden sich Schlitze 19 in den Böden. Die Luft gelangt über die Kanäle und die Schlitze in das Kompostiergut.

Um das Verstopfen der Schlitze 19 durch Kompostiergut zu verhindern, sind mit den Schiebern 21 der Kratzböden Nocken 22 verbunden, die in den Schlitzen gleiten und mit der Bewegung der Schieber hin- und hergehen. In den Kanälen sind Förderspiralen 23 angeordnet, die dauernd, jedoch verhältnismässig langsam laufen und in die Kanäle fallendes Kompostiergut zur Austragsförderspirale 11 befördern. Auf diese Weise wird das Verstopfen der Kanäle 18 verhindert.

Alternativ zu den mit bewegten Nocken und Förderspiralen ausgestatteten Belüftungskanälen ist auch eine einfachere Lösung möglich, bei der in den Belüftungskanälen Luftverteilerrohre angeordnet sind, die mit Rollschotter und Bauvlies nach oben abgedeckt sind.

Die Belüftung der Kompostierboxen wird vorteilhafterweise nach dem Rotte-Filterverfahren durchgeführt. Bei diesem Verfahren werden die Belüftungen von zwei oder mehreren Kompostierboxen zusammengeschaltet, so dass die Luft durch eine oder einen Teil der Kompostierboxen abgesaugt und diese Luft einer oder mehreren anderen zugeführt wird. Von Zeit zu Zeit wird die Richtung der Luftströmung gewechselt.

Zu diesem Zweck sind Gebläse und Ventile in den Verbindungsleitungen zwischen den Belüftungskanälen der einzelnen Kompostierboxen vorgesehen. Die Ventile und die Pumpe sind von einem zentralen Rechner gesteuert.

An der Hallenwand befindet sich jeder Box zugeordnet ein Messfühler 25 zur Erfassung der für die Kompostierung wichtigen Parameter, wie Temperatur, Feuchtigkeit etc. Es kann vorteilhaft sein, diese Parameter auch an anderen Stellen, vor allem auch beispielsweise im Kompostiergut selbst oder in der Abluft zu messen.

Entlang der Aussenseite der auf der Seite der Kompostierboxen befindlichen Längswand ist ein Bedienungsraum 26 angeordnet, der sich über die ganze Hallenlänge erstreckt und die Hydraulikantriebe 9 der Kratzböden beherbergt.

Im Betrieb werden der Anlage an einer geeigneten Stelle der den Materialtransport bewirkenden Förderspiralen kompostierbare Abfallstoffe als Kompostiergut K zugeführt. Gelangt das Kompostiergut z.B. in die Austragsförderspirale 11, so fördert sie das Kompostiergut zur Verbindungsförderspirale 13, von der es der Eintragsförderspirale 12 zugeführt wird. In dieser wiederum gelangt es zur Verteilförderspirale 15, die vorher in die richtige Position zum Füllen einer gewünschten Kompostierbox gefahren wurde. In dem in Fig.2 wiedergegebenen Zustand befindet sich die Verteilförderspirale 15 über der vierten Box.

In der Box wird das zu behandelnde Rohmaterial zu Kompost umgewandelt. Zu diesem Zweck sind ggf. die Temperatur und die Feuchtigkeit an die optimalen Bedingungen anzupassen. Für die Feuchtigkeitsregelung hat es sich als vorteilhaft herausgestellt, dem Kompostiergut am unteren Ende der Verbindungsförderspirale 13 Wasser zuzufügen und am oberen Ende die Feuchtigkeit zu messen. Die zugeführte Wassermenge wird mittels des Messwertes der Feuchtigkeit geregelt.

Zweckmässigerweise wird für die Befeuchtung des Kompostiergutes das unter den Kompostierboxen aufgefangene Sickerwasser verwendet. Auf diese Weise entsteht kein Überschusswasser, das aufwendig gereinigt werden müsste.

Die erforderlichen Heizungs- oder Kühlungsanlagen und Bewässerungseinrichtungen sind ohne weiteres in üblicher Bauweise einzurichten und werden deshalb hier nicht speziell beschrieben.

Zur Umschichtung oder Mischung des Kompostiergutes oder zum Austrag von fertigem Kompost wird mittels der Kratzbodenanlage jeweils die unterste Schicht des in einer Kammer lagernden Materials zur Austragsöffnung 10 der Kammer geschoben und gelangt durch diese in die Austragsförderspirale 11. Über diese und die mit ihr verbundenen Förderspiralen gelangt das Kompostiergut entweder wieder in dieselbe Kammer oder zwecks Mischung in eine andere Kammer.

Es ist auch möglich, mehrere Austragsöffnungen gleichzeitig geöffnet zu halten, so dass Kompostiergut von verschiedenen Kompostierboxen in die Austragsförderspirale gelangt und von dort nach oben befördert wird. Durch die verhältnismässig lange Förderstrecke wird das Kompostiergut schon während der Förderung gut gemischt. So ist es beispielsweise gut möglich, sehr nassen Klärschlamm aus einer Kompostierbox mit Sägemehl aus einer anderen Kompostierbox durch gleichzeitiges Austragen zu mischen und in eine dritte Kompostierbox zu transportieren.

Um den fertigen Kompost auszutragen, lässt man die Austragsförderspirale 11 in umgekehrter Richtung laufen, so dass das durch sie geförderte Kompostiergut zu einem Lagerungsplatz oder zu einem Transportfahrzeug gelangt.

Die Kompostieranlage kann auch in runden Silos oder Containern, die rundum geschlossen sind angeordnet werden.

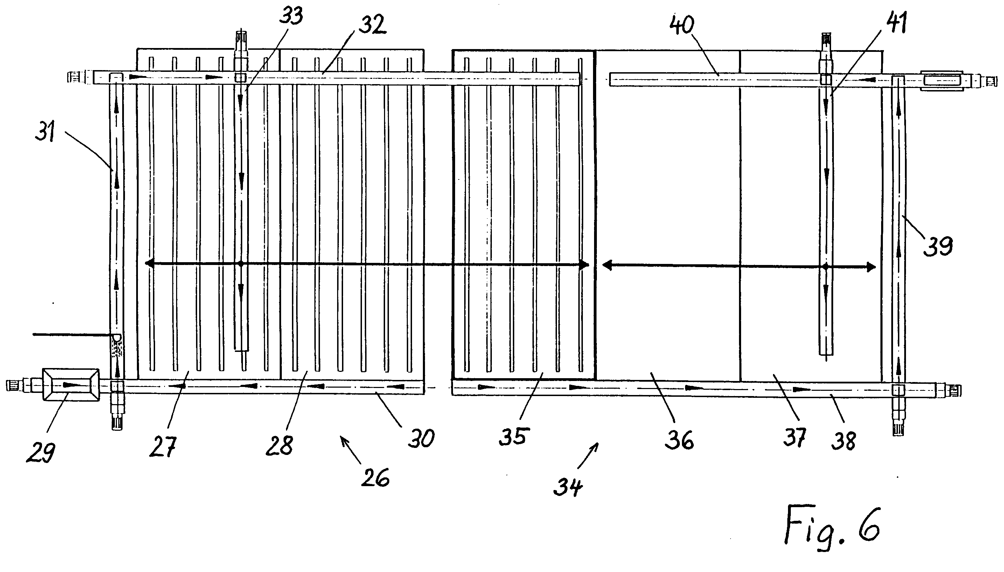

Der in Fig. 6 gezeigte Grundriss einer Anlage mit zwei getrennten Systemen oder Bereichen lässt deren Anordnung erkennen. Ein erster Bereich 26 hat zwei nebeneinander angeordnete Kompostierboxen 27,28 und dient der Kompostierung von belastetem Kompostiergut, das über den Einfüllschacht 29 in das System eingebracht wird. Mittels Austragsförderspirale 30, Verbindungsförderspirale 31, Eintragsförderspirale 32 und Verteilerförderspirale 33 erfolgt das Zuführen, Mischen, Umwälzen und Umsetzen des Kompostiergutes, wie bereits beschrieben.

Der zweite Bereich 34 hat drei nebeneinander angeordnete Boxen 35,36,37 und dient zur Weiterverarbeitung des hygienisierten Kompostiergutes. Die dem ersten Bereich 26 am nächsten liegende Box 35 hat ausschliesslich die Funktion, das hygienisierte Gut zu übernehmen und an die folgenden Boxen weiterzugeben. Zu diesem Zweck erstreckt sich die Eintragsförderspirale 32 des ersten Bereiches bis über diese Box 35, und auch die Verteilerförderspirale 33 kann bis zu dieser Box 35 gefahren werden. Umgekehrt kann kein Kompostiergut von Bereich 34 zurück in den Bereich 26 gelangen.

Der Bereich 34 für das hygienisierte Kompostiergut besitzt in gleicher Weise eine Austragsförderspirale 38, eine Verbindungsförderspirale 39, eine Eintragsförderspirale 40 und eine Verteilerförderspirale 41.

Im Bereich 34 für das hygienisierte Kompostiergut sind zweckmässigerweise auch Einrichtungen zur Regelung der Temperatur, der Feuchtigkeit etc. vorgesehen, die hier nicht im einzelnen beschrieben werden. Ein wichtiger Aspekt ist, dass im Gegensatz zum ersten Bereich 26 im Bereich 34 nicht mit Sickerwasser befeuchtet wird, sondern mit sauberem Wasser.

## Patentansprüche

1. Vollautomatische Kompostieranlage in einer geschlossenen, durch Wände und ein Dach begrenzten Halle mit mehreren nebeneinander angeordneten Kompostierboxen, unterhalb derselben verlaufenden und mit den Boxen in Verbindung stehenden Belüftungskanälen und Mitteln zum Zuführen, Mischen, Umwälzen, Umsetzen und Austragen des zu behandelnden Rohmaterials und des Komposts, dadurch gekennzeichnet, dass die Mittel zum Zuführen, Mischen, Umwälzen, Umsetzen und Austragen aus mindestens einer festen Austragsförderspirale (11), die sich vor den Austragsöffnungen (10) mehrerer Kompostierboxen (6) erstreckt, mindestens einer festen Eintragsförderspirale (12), die sich oberhalb mehrerer Kompostierboxen erstreckt, mindestens einer schräg verlaufenden Verbindungsförderspirale (13) und mindestens einer über die Kompostierboxen bewegbaren Verteilerförderspirale (15) bestehen.

2. Kompostieranlage nach Anspruch 1, dadurch gekennzeichnet, dass die Verbindungsförderspirale (13) ein Gehäuse besitzt, das über der Spirale freien Raum aufweist.

3. Kompostieranlage nach Anspruch 1, dadurch gekennzeichnet, dass am unteren Ende der Verbindungsförderspirale (13) eine Einrichtung zur Wasserzufuhr und an ihrem oberen Ende eine Messeinrichtung zur Messung der Feuchtigkeit vorgesehen sind, und dass die beiden Einrichtungen zu einer Feuchtigkeitsregelung verbunden sind.

4. Kompostieranlage nach Anspruch 1, dadurch gekennzeichnet, dass die Verteilerförderspirale (15) Abwurföffnungen (17) besitzt mit einer Einrichtung zu deren gleichzeitigem Öffnen und Schliessen.

5. Kompostieranlage nach Anspruch 1, dadurch gekennzeichnet, dass sie zwei voneinander getrennte Bereiche aufweist, von denen jeder mehrere Kompostierboxen und ihnen zugeordnete Austrags-, Eintrags-, Verbindungs- und Verteilerförderspiralen besitzt, wobei zum Materialtransport in eine Richtung zwischen den Bereichen die Eintragsförderspirale (32) des einen Bereiches (26) bis über die erste Kompostierbox (35) des zweiten Bereiches (34) fahrbar ist.

6. Kompostieranlage nach Anspruch 1, dadurch gekennzeichnet, dass eine Volumenstrommessung in einer Förderspirale vorgesehen ist, die mit Einrichtungen zum Materialaustrag aus den Boxen zu einem Regelkreis verbunden ist.

## Claims

1. A fully automatic composting installation in a closed hall limited by walls and a roof having several composting boxes disposed side by side, ventilation channels extending thereunder and associated with the boxes and means for conveying, mixing, turning over, moving and discharging the raw material to be treated and the compost, characterised in that the means for conveying, mixing, turning over, moving and discharging consist of at least one fixed discharge conveying spiral (11) that extends in front of the discharge apertures (10) of several composting boxes (6), at least one fixed input conveying spiral (12) that extends above several composting boxes, at least one diagonally disposed connection conveying spiral (13) and at least one distribution conveying spiral (15) movable above the composting boxes.

2. A composting installation according to Claim 1, characterised in that the connection conveying spiral (13) has a housing having free space above the spiral.

3. A composting installation according to Claim 1, characterised in that a device for adding water is provided at the lower end and a measuring device for measuring the moisture is provided at the upper end of the connecting spiral (13) and that the two devices are associated for moisture regulation.

4. A composting installation according to Claim 1, characterised in that the distribution conveying spiral (15) has discharge apertures (17) with a device for their simultaneous opening and closing.

5. A composting installation according to Claim 1, characterised in that it has two areas separated from one another, each of which has several composting boxes and delivery, input, connection and distribution spirals allocated thereto, the input conveying spiral (32) of the one area (26) being movable to above the first composting box (35) of the second area (34) to transport the material in one direction between the areas.

6. A composting installation according to Claim 1, characterised in that a volume flow measurement is provided in one conveying spiral which is associated in a control loop with devices for discharging material from the boxes.

## Revendications

1. Installation de compostage entièrement automatique dans un hangar fermé délimité par des murs et un toit avec plusieurs boxes de compostage disposés les uns à côté des autres, s'étendant sous ceux-ci et communiquant avec les boxes, des canaux d'aération et des moyens pour alimenter, mélanger, renverser, déplacer et évacuer la matière première à traiter et le compost, caractérisée en ce que les moyens pour alimenter, mélanger, renverser, déplacer et évacuer sont composés d'au moins une spirale transporteuse d'évacuation (11) fixe qui s'étend devant les ouvertures d'évacuation (10) de plusieurs boxes de compostage (6), d'au moins une spirale transporteuse d'alimentation fixe (12) qui s'étend au-dessus de plusieurs boxes de compostage, d'au moins une spirale transporteuse de jonction (13) qui s'étend diagonalement et d'au moins une spirale transporteuse de distribution (15) mobile au-dessus des boxes de compostage.

2. Installation de compostage selon la revendication 1, caractérisée en ce que la spirale transporteuse de jonction (13) possède un carter qui présente un espace libre au-dessus de la spirale.

3. Installation de compostage selon la revendication 1, caractérisée en ce que sur l'extrémité inférieure de la spirale transporteuse de jonction (13), il est prévu un dispositif d'alimentation en eau et sur son extrémité supérieure, un dispositif de mesure pour mesurer l'humidité et en ce que les deux dispositifs sont reliés en un dispositif de réglage de l'humidité.

4. Installation de compostage selon la revendication 1, caractérisée en ce que la spirale transporteuse de distribution (15) possède des ouvertures de vidage (17) avec un dispositif pour leur ouverture et leur fermeture simultanée.

5. Installation de compostage selon la revendication 1, caractérisée en ce qu'elle présente deux zones séparées l'une de l'autre dont chacune possède plusieurs boxes de compostage et des spirales transporteuses d'évacuation, d'alimentation, de jonction et de distribution correspondantes, la spirale transporteuse d'alimentation (32) de l'une des zones (26) étant transportable dans une direction entre les zones jusqu'au-dessus du premier boxe de compostage (35) de la seconde zone (34) pour le transport de la matière.

6. Installation de compostage selon la revendication 1, caractérisée en ce que dans une spirale transporteuse, un compteur de débit est prévu, qui est relié avec des dispositifs d'évacuation de la matière hors des boxes pour former un circuit de réglage.
